# EUROPÄISCHE PATENTSCHRIFT

(11) **EP 0 980 128 B1**
(45) Veröffentlichungstag und Bekanntmachung des Hinweises auf die Patenterteilung: **15.06.2011**
(21) Anmeldenummer: 99115331.3
(22) Anmeldetag: 03.08.1999
(51) Int. Cl.: H02H 3/247

(54) **Unterspannungsauslöser**
Undervoltage release device
Déclencheur à manque de tension

(30) Priorität: 13.08.1998 DE 19836828
(43) Veröffentlichungstag der Anmeldung: 16.02.2000
(73) Patentinhaber: SIEMENS AKTIENGESELLSCHAFT, 80333 München (DE)
(72) Erfinder: Vierling, Winfried, Dipl.-Ing., 93073 Neutraubling (DE)

(56) Entgegenhaltungen:
- EP-A- 0 813 219
- DE-A- 1 615 776
- DE-A- 3 912 601
- US-A- 5 224 010

## Beschreibung

Die Erfindung betrifft einen Unterspannungsauslöser mit einem in einem Auslösestromkreis angeordneten Auslöserelais, welches bei Unterschreiten eines vorgegebenen Spannungsgrenzwertes einen Auslöseimpuls zur Betätigung eines zwischen ein Stromnetz und einen Verbraucherstromkreis geschalteten Leitungsschutzschalters ausgibt, und mit einer Verzögerungsschaltung, welche während einer vorgegebenen Verzögerungszeit eine den Spannungsgrenzwert überschreitende Netzspannung am Auslöserelais aufrechterhält.

Aus der DE 16 15 776 A ist beispielsweise eine Schaltanordnung zur Aufrechterhaltung einer Abfallverzögerung von mit Wechselstrom betriebenen elektromagnetischen Schalt- und Steuergeräten bei kurzzeitiger Netzspannungsabsenkung oder kurzzeitigem Netzausfall bekannt.

Ein derartiger Unterspannungsauslöser mit einer Auslöseverzögerung ist weiterhin aus der DE 39 12 601 A1 bekannt. Mittels einer solchen Auslöseverzögerung wird verhindert, daß eine kurzzeitige und deshalb unkritische Spannungsverminderung zum Auslösen des Unterspannungsauslösers führt. Bei dem bekannten Unterspannungsauslöser ist das Auslöserelais mit einer Magnetspule versehen, der zur Erzielung der verzögerten Auslösung ein Tiefpaß vorgeschaltet ist. Dieser Tiefpaß umfaßt einen mit der Magnetspule in Reihe geschalteten ohmschen Widerstand sowie eine diesem Widerstand und der Magnetspule parallelgeschalteten Kondensator. Im Betrieb des Unterspannungsauslösers liegt an der Magnetspule sowie am Kondensator die Netzspannung an. Der Kondensator befindet sich dadurch in aufgeladenem Zustand. Bei einem Ausfall der Netzspannung versorgt der aufgeladene Kondensator die Magnetspule zunächst weiterhin mit Spannung. Das Auslöserelais reagiert deshalb nicht unmittelbar auf den Ausfall der Netzspannung, sondern erst nach einer Verzögerungszeit, innerhalb derer sich der Kondensator über den Widerstand und die Magnetspule entladen hat, so daß die an der Magnetspule anliegende Restspannung den Spannungsgrenzwert unterschreitet. Der bei dem bekannten Unterspannungsauslöser eingesetzte Tiefpaß verzögert in nichtselektiver Weise jede schnelle Änderung der Netzspannung. Dies hat den nachteiligen Nebeneffekt, daß bei einem sprunghaften Anstieg der Netzspannung - z.B. infolge eines Einschaltprozesses - die ansteigende Netzspannung sich nur verzögert an der Magnetspule aufbaut, da zunächst der Kondensator aufgeladen wird. Dies kann zur Folge haben, daß das Auslöserelais fälschlicherweise eine Unterspannung detektiert und den Stromkreis unmittelbar nach dem Einschaltprozeß erneut sperrt.

Der Erfindung liegt daher die Aufgabe zugrunde, einen Unterspannungsauslöser mit zeitverzögerter Auslösung insbesondere hinsichtlich seines Ansprechverhaltens beim Einschalten der Netzspannung zu verbessern.

Diese Aufgabe wird erfindungsgemäß gelöst durch die Merkmale des Anspruchs 1. Danach ist der Verzögerungsschaltung ein Gleichrichter vorgeschaltet, über den der Verzögerungsschaltung eine gleichgerichtete Netzspannung zugeleitet ist. Die die Verzögerungsschaltung ist weiterhin mit Mitteln versehen, die bei einem sprunghaften Ansteigen der Netzspannung - insbesondere beim Einschalten - die Verzögerungswirkung unterdrücken, so daß die Verzögerungsschaltung zunächst inaktiv bleibt. Der Unterspannungsauslöser reagiert somit unmittelbar nach Einschalten der Netzspannung wie ein Unterspannungsauslöser ohne Auslöseverzögerung. Erst nach einer auf den Einschaltprozeß folgenden Einschaltzeitspanne ist die Verzögerungsschaltung aktiviert und beeinflußt das Auslöseverhalten des Unterspannungsauslösers. Die Netzspannung liegt unmittelbar nach dem Einschaltprozeß nahezu vollständig am Auslöserelais an, wodurch ein fälschliches Auslösen des Auslöserelais wirksam verhindert ist.

In einer bevorzugten Ausführungsform weist der Unterspannungsauslöser mindestens einen Hilfsschalter auf, der beim Einschalten des Unterspannungsauslösers vorauseilend bezüglich einer Freigabe des Stromnetzes durch den Leitungsschutzschalter die Netzspannung an den Auslösestromkreis anlegt. Mittels eines solchen, z.B. aus der EP 0 813 219 bekannten Hilfsschalters wird vorteilhafterweise der Stromfluß durch den Unterspannungsauslöser in ausgeschaltetem Zustand vollständig unterbunden. Der Einsatz des Hilfsschalters erfordert ein besonders schnelles Ansprechverhalten des Auslösekreises beim Anlegen der Netzspannung, da das Auslöserelais in der Zeitspanne zwischen dem Schließen des Hilfsschalters und dem darauffolgenden Schließen des Leitungsschutzschalters den Betrag der Netzspannung ausgewertet haben muß. Diese Zeitspanne beträgt üblicherweise nur etwa 20 msec. Aufgrund des besonders guten Ansprechverhaltens der genannten Verzögerungsschaltung beim Anlegen der Netzspannung ist es möglich, die Vorteile eines Unterspannungsauslösers mit einem vorauseilenden Hilfsschalter und die Vorteile eines mit einer Auslöseverzögerung versehenen Unterspannungsauslösers miteinander zu verknüpfen.

Eine besonders zweckmäßige schaltungstechnische Realisierung der Verzögerungsschaltung umfaßt einen dem Auslöserelais parallelgeschalteten Kondensator, wobei dem Kondensator als Mittel zur Unterdrückung der Verzögerungswirkung ein ohmscher Ladewiderstand unmittelbar vorgeschaltet ist. Der Ladewiderstand bewirkt, daß beim Anlegen der Netzspannung an den Auslösekreis nur ein geringer Strom auf den Kondensator fließt. Der Kondensator wird dadurch nur vergleichsweise langsam aufgeladen und ist somit erst nach einer zur Aufladung benötigten Einschaltzeitspanne im Sinne einer Auslöseverzögerung aktiviert. Infolge des gehemmten Stromflusses auf den Kondensator steigt die auf das Auslöserelais wirkende Spannung unmittelbar nach dem Anlegen der Netzspannung auf annähernd deren vollen Betrag an. Die Ansprechzeit des Auslöserelais ist somit besonders gering. Der Einsatz eines ohmschen Ladewiderstands ist dabei besonders platzsparend und preisgünstig. Als besonders zweckmäßige Alternative zu einem ohmschen Ladewiderstand kann eine induktive Drossel als Mittel zur Unterdrückung der Verzögerungswirkung eingesetzt werden. Der Widerstand einer solchen induktiven Drossel ist vorteilhafterweise zum Zeitpunkt des Anlegens der Netzspannung besonders hoch und sinkt mit der Zeit auf einen geringen Wert ab. Auf diese Weise wird gleichzeitig ein schneller Spannungsanstieg am Auslöserelais und eine kurze Ladezeit des Kondensators erreicht.

In besonders vorteilhafter Weise ist dem Mittel zur Unterdrückung der Verzögerungswirkung eine in Laderichtung sperrende Diode parallelgeschaltet. Bei dieser Schaltung erfolgt die Ladung des Kondensators zeitverzögert über das Mittel zur Unterdrückung der Verzögerungswirkung, während ein Entladungsstrom des Kondensators bei Ausfall der Netzspannung nahezu widerstandsfrei über die Diode fließt. Die Spannung des Kondensators fällt somit fast vollständig am Auslöserelais ab.

Die mit der Erfindung erzielten Vorteile bestehen insbesondere darin, daß die Verzögerungsschaltung selektiv einen Spannungsausfall, d.h. eine sprunghaften Verminderung der Netzspannung unter den Spannungsgrenzwert, am Auslöserelais verzögert. Ein Spannungsanstieg der Netzspannung, insbesondere bei einem Einschaltvorgang, wirkt dagegen unmittelbar auf das Auslöserelais. Dies ermöglicht es, einen Unterspannungsauslöser mit vorauseilenden Hilfsschaltern zusätzlich mit einer Auslösungsverzögerung zu versehen.

Ausführungsbeispiele der Erfindung werden nachfolgend anhand einer Zeichnung näher erläutert. Dabei zeigen:
- FIG 1: schematisch einen mit einem Leitungsschutzschalter kombinierten Unterspannungsauslöser mit einem Auslö- serelais, einer Verzögerungsschaltung und voreilenden Hilfsschaltern,
- FIG 2: schematisch vereinfacht ein Schaltbild des Schaltre- lais und der Verzögerungsschaltung gemäß FIG 1, und
- FIG 3: in einer Darstellung gemäß FIG 2 eine alternative Ausführung der Verzögerungsschaltung.

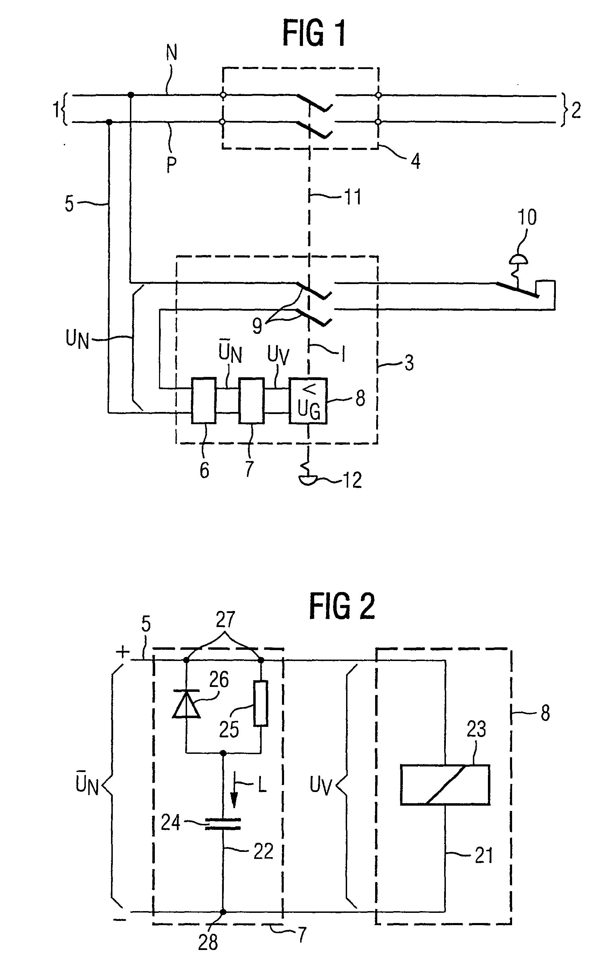

Um bei Auftreten einer Unterspannung in einem Stromnetz 1 einen daran angeschlossenen Verbraucherstromkreis 2 vom Stromnetz 1 zu trennen, ist gemäß FIG 1 ein Unterspannungsauslöser 3 in Kombination mit einem Leitungsschutzschalter 4 eingesetzt. Der Leitungsschutzschalter 4 ist dazu zwischen das Stromnetz 1 und den Verbraucherstromkreis 2 geschaltet und trennt im Bedarfsfall die Leiter des Stromnetzes 1, das im Ausführungsbeispiel aus einem Null-Leiter N und einer Phase P gebildet ist, von den entsprechenden Leitern des Verbraucherstromkreises 2 ab.

Der Unterspannungsauslöser 3 umfaßt einen an das Stromnetz 1 angeschlossenen Auslösestromkreis 5. Die Netzspannung U_{N} wird innerhalb des Auslösestromkreises 5 über einen Gleichrichter 6 als gleichgerichtete Netzspannung U̅_{N} einer Verzögerungsschaltung 7 zugeleitet. Die Verzögerungsschaltung 7 leitet eine zeitverzögerte Netzspannung Uᵥ an ein Auslöserelais 8 weiter. Im Auslösestromkreis 5 sind desweiteren zwei Hilfsschalter 9 angeordnet, denen ein Prüftaster 10 zwischengeschaltet ist. Der Leitungsschutzschalter 4 und die Hilfsschalter 9 werden über ein Wirkungsglied 11 an das Auslöserelais 8 gekoppelt. Mittels dieses Wirkungsgliedes 11, das bevorzugt als mechanisches Kraftübertragungssystem ausgebildet ist, kann vom Auslöserelais 8 ein Auslöseimpuls I übertragen werden, der ein Öffnen der Hilfsschalter 9 und des Leitungsschutzschalters 4 herbeiführt.

Mittels einer auf das Wirkungsglied 11 wirkenden Betätigungseinheit 12, z.B. eines Kippschalters, können das Wirkungsglied 11 manuell betätigt und somit die Hilfsschalter 9 und der Leitungsschutzschalter 4 sowohl geöffnet als auch geschlossen werden. Beim Einschalten des Unterspannungsauslösers 3 und des Leitungsschutzschalters 4, d.h. beim Schließen der Hilfsschalter 9 und des Leitungsschutzschalters 4 mittels der Betätigungseinheit 12, werden die Hilfsschalter 9 stets früher geschlossen als die Kontakte des Leitungsschutzschalters 4. Die Hilfsschalter 9 eilen somit dem Leitungsschutzschalter 4 voraus.

Bei geschlossenen Hilfsschaltern 9 liegt die Netzspannung U_{N} am Gleichrichter 6 an und wird von diesem in gleichgerichteter Form an die Verzögerungsschaltung 7 weitergeleitet. Die in der Zeitverzögerungsschaltung modifizierte Netzspannung Uᵥ wird im Auslöserelais 8 hinsichtlich ihres Betrages überprüft. Unterschreitet die am Auslöserelais 8 anliegende verzögerte Netzspannung Uᵥ einen vorgegebenen Spannungsgrenzwert U_{G}, so gibt das Auslöserelais 8 den Auslöseimpuls I an das Wirkungsglied 11 ab. Infolge des vorauseilenden Schließens der Hilfsschalter 9 steht beim nachfolgenden Schließen des Leitungsschutzschalters 4 bereits fest, ob die Netzspannung U_{N} die Bedingung U_{N} > U_{G} erfüllt. Ist dies nicht der Fall, so verhindert das Auslöserelais 8 das Schließen des Leitungsschutzschalters 4.

Im Normalbetrieb des Unterspannungsauslösers 3, d.h. wenn die Netzspannung U_{N} den Spannungsgrenzwert U_{G} übersteigt, sind die Hilfsschalter 9 geschlossen. Das Auslöserelais 8 überprüft somit fortlaufend den Betrag der zeitverzögerten Netzspannung U_{V}, der annähernd der Amplitude der Netzspannung U_{N} entspricht. Mittels des Prüftasters 10 kann zu Testzwecken der Auslösestromkreis 5 unterbrochen werden. Auf diese Weise wird ein Ausfall der Netzspannung U_{N} simuliert. Bei einwandfreier Funktion des Unterspannungsauslösers 3 löst dieser hierauf aus.

In FIG 2 ist in vereinfachter Weise eine schaltungstechnische Realisierung der Verzögerungsschaltung 7 dargestellt. Innerhalb der Verzögerungsschaltung 7 findet eine Verzweigung des Auslösestromkreises 5 in zwei zueinander parallele Strompfade 21 und 22 statt. Über den Strompfad 21 ist die Verzögerungsschaltung 7 mit den Auslöserelais 8 verbunden, innerhalb welchem in den Strompfad 21 eine Magnetspule 23 geschaltet ist. Der sich innerhalb der Verzögerungsschaltung 7 erstrekkende Strompfad (oder Parallelpfad) 22 enthält einen Kondensator 24, welcher somit nach Art eines Tiefpasses der Magnetspule 23 parallelgeschaltet ist. Der Strompfad 22 enthält desweiteren einen ohmschen Ladewiderstand 25, welchem eine Diode 26 parallelgeschaltet ist. Die Diode 26 ist dabei derart ausgerichtet, daß sie in Laderichtung L, d.h. bei einem innerhalb des Strompfades 22 über den Ladewiderstand 25 oder die Diode 26 auf den Kondensator 24 zufließenden Strom, sperrt. Die Verzögerungsschaltung 7 wird aus dem Gleichrichter 6 mit der gleichgerichteten Netzspannung U̅_{N} versorgt. Dabei liegt die dem Ladewiderstand 25 und der Diode 26 zugewandte Zweigstelle 27 der Strompfade 21,22 auf positivem Potential (+), während die dem Kondensator 24 zugewandte Zweigstelle 28 der Strompfade 21,22 auf negativem Potential (-) liegt.

Beim Einschalten des Unterspannungsauslösers 3 liegt unmittelbar nach dem Schließen der Hilfsschalter 9 die gleichgerichtete Netzspannung U̅_{N} an der Verzögerungsschaltung 7 an. Während die Magnetspule 23 der sprunghaft ansteigenden Netzspannung U_{V} einen hohen Einschaltwiderstand entgegensetzt, ist der Einschaltwiderstand des noch ungeladenen Kondensators 24 vernachlässigbar gering. Ohne Zwischenschaltung des Ladewiderstands 25 und der Diode 26 wäre der Auslösestromkreis 5 beim Einschalten über den Strompfad 22 quasi kurzgeschlossen. Ein Aufbau der zwischen den Zweigstellen 27 und 28 anliegenden verzögerten Netzspannung U̅_{V} würde somit proportional zum Ladezustand des Kondensators 24 nur langsam erfolgen. Das Auslöserelais 8 würde daher während des Ladevorgangs des Kondensators 24 die Netzspannung U_{N} unterbewerten, wodurch eine Fehlauslösung des Unterspannungsauslösers 3 verursacht würde.

Der Ladewiderstand 25 wirkt hierbei als Mittel zur Unterdrükkung der Verzögerungswirkung, indem er den über den Strompfad 22 fließenden Strom begrenzt. Auf diese Weise wird beim Einschalten ein vergleichsweise schneller Anstieg der zwischen den Zweigstellen 27 und 28 anliegenden Spannung U_{V} erreicht.

In einer auf den Einschaltprozeß folgenden Einschaltzeitspanne wird der Kondensator 24 allmählich geladen und wirkt danach verzögernd bei einem Ausfall der Netzspannung U_{N}. Bei einem solchen Ausfall der Netzspannung U_{N}, und somit auch der gleichgerichteten Netzspannung U_{N}, wird der Kondensator 24 entgegen der Laderichtung L über die Diode 26 und die Magnetspule 23 entladen. Der Stromfluß über die Diode 26 erfolgt dabei vorteilhafterweise weitgehend widerstandsfrei, so daß die Spannung des Kondensators 24 annähernd vollständig über der Magnetspule 23 abfällt. Eine Auslösung des Auslöserelais 8 erfolgt daher erst, wenn der Kondensator 24 soweit entladen ist, daß dessen Restspannung den als Auslöseschwellwert vorgegebenen Spannungsgrenzwert U_{G} unterschreitet.

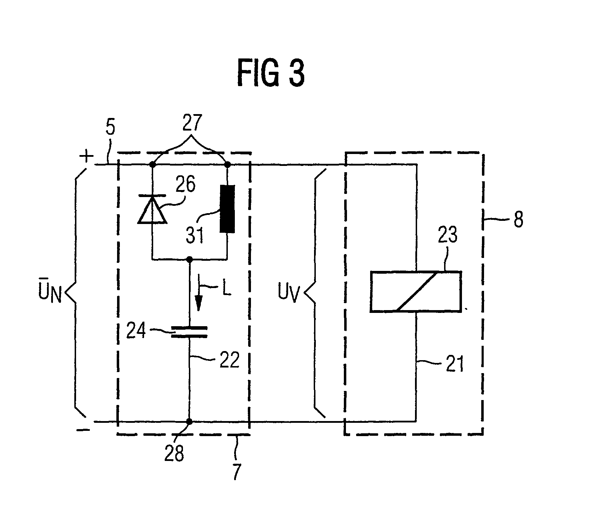

In FIG 3 ist eine besonders vorteilhafte Variante der Verzögerungsschaltung 7 dargestellt. Anstelle des Ladewiderstandes 25 ist hier eine induktive Drossel 31 eingesetzt. Im Gegensatz zum ohmschen Widerstand 25 weist die Drossel 31 einen zeitabhängigen Widerstand auf, der von der zeitlichen Änderung der anliegenden Netzspannung U̅_{N} abhängig ist. Bei infolge eines Einschaltprozesses sprunghaft ansteigender Netzspannung U_{N} weist die Drossel 31 einen hohen Einschaltwiderstand auf, der nach dem Einschaltprozeß rasch abfällt. Infolge des hohen Einschaltwiderstandes wird einerseits ein schneller Aufbau der zwischen den Zweigstellen 27 und 28 wirkenden verzögerte Netzspannung U_{V} erreicht. Andererseits wird durch den raschen Zerfall des Widerstandes der Drossel 31 die Ladezeit des Kondensators 24 verkürzt.

## Patentansprüche

1. Unterspannungsauslöser zum Trennen eines eine Netzspannung (U_{N}) führenden Stromnetzes (1) von einem Verbraucherstromkreis (2),
- mit einem in einem Auslösestromkreis (5) angeordneten Auslöserelais (8), welches einen Auslöseimpuls (I) zur Betätigung eines zwischen das Stromnetz (1) und den Verbraucherstromkreis (2) geschalteten Leitungsschutzschalters (4) ausgibt, wenn eine am Auslöserelais (8) anliegende Spannung (U_{V}) einen vorgegebenen Spannungsgrenzwert (U_{G}) unterschreitet,
- mit einer einen Kondensator (24) umfassenden Verzögerungsschaltung (7), welche bei Absinken der Netzspannung (U_{N}) die am Auslöserelais (8) anliegende Spannung (U_{V}) während einer vorgegebenen Verzögerungszeit mit einem den Spannungsgrenzwert (U_{G}) überschreitenden Betrag aufrechterhält, und
- mit einem der Verzögerungsschaltung (7) vorgeschalteten Gleichrichter (6), über den der Verzögerungsschaltung (7) eine gleichgerichtete Netzspannung (U_{N}) zugeleitet ist,
**dadurch gekennzeichnet, dass** die Verzögerungsschaltung (7) Mittel (25,31) aufweist, die die Verzögerungswirkung bei einem sprunghaften Anstieg der Netzspannung (U_{N}) durch Begrenzung des Ladestroms des Kondensators (24) unterdrücken.

2. Unterspannungsauslöser nach Anspruch 1, **dadurch gekennzeichnet, daß** mindestens ein Hilfsschalter (9) vorgesehen ist, welcher bezüglich des Schließens des Leitungsschutzschalters (4) vorauseilend die Netzspannung (U_{N}) an den Auslösestromkreis (5) anlegt.

3. Unterspannungsauslöser nach einem der Ansprüche 1 oder 2, **dadurch gekennzeichnet, daß** die Verzögerungsschaltung (7) einen dem Auslöserelais (8) parallelgeschalteten Kondensator (24) mit einem als Mittel zur Unterdrückung der Verzögerungswirkung diesem im Parallelpfad (22) vorgeschalteten Ladewiderstand (25) umfaßt.

4. Unterspannungsauslöser nach einem der Ansprüche 1 oder 2, **dadurch gekennzeichnet, daß** die Verzögerungsschaltung (7) einen dem Auslöserelais (8) parallelgeschalteten Kondensator (24) mit einer als Mittel zur Unterdrückung der Verzögerungswirkung diesem im Parallelpfad (22) vorgeschalteten induktiven Drossel (31) umfaßt.

5. Unterspannungsauslöser nach einem der Ansprüche 1 bis 4,
**dadurch gekennzeichnet, daß** dem Mittel (25,31) zur Unterdrückung der Verzögerungswirkung eine in Laderichtung (L) sperrende Diode (26) parallelgeschaltet ist.

## Claims

1. Undervoltage release device for disconnecting a power network (1) carrying a mains voltage (U_{N}) from a load circuit (2),
- having a release relay (8) disposed in a tripping circuit (5) which outputs a tripping pulse (I) to activate a circuit breaker (4) connected between the power network (1) and the load circuit (2) when a voltage (U_{V}) present at the release relay (8) falls below a predefined voltage threshold value (U_{G}),
- having a delay circuit (7) comprising a capacitor (24), said delay circuit (7) maintaining the voltage (U_{V}) present at the release relay (8) when the mains voltage (U_{N}) falls, at a level in excess of the voltage threshold value (U_{G}) for a predefined delay period, and
- having a rectifier (6) connected upstream of the delay circuit (7), via which rectifier (6) the delay circuit (7) is fed with a rectified mains voltage (U̅_{N}),
**characterised in that** the delay circuit (7) has means (25, 31) which suppress the delay effect if the mains voltage (U_{N}) suddenly increases, by restricting the charging current of the capacitor (24).

2. Undervoltage release device according to claim 1, **characterised in that** at least one auxiliary switch (9) is provided, which prior to the closure of the circuit breaker (4) applies the mains voltage (U_{N}) to the trigger circuit (5).

3. Undervoltage release device according to one of claims 1 or 2, **characterised in that** the delay circuit (7) includes a capacitor (24) connected in parallel to the release relay (8), with a charging resistor (25) connected upstream thereof in the parallel path (22) as means for suppressing the delay effect.

4. Undervoltage release device according to one of claims 1 or 2, **characterised in that** the delay circuit (7) includes a capacitor (24) connected in parallel to the release relay (8), with an inductive reactor (31) connected upstream thereof in the parallel path (22) as means for suppressing the delay effect.

5. Undervoltage release device according to one of claims 1 to 4, **characterised in that** a diode (26) that blocks in the charging direction (L) is connected in parallel to the means (25, 31) for suppressing the delay effect.

## Revendications

1. Déclencheur à manque de tension pour séparer d'un circuit électrique de consommateur (2) un réseau électrique (1) conduisant une tension de réseau (UN),
- avec un relais de déclenchement (8) situé dans un circuit électrique de déclenchement (5) et qui émet une impulsion de déclenchement (I) pour actionner un disjoncteur de protection de ligne (4) monté entre le réseau électrique (1) et le circuit électrique de consommateur (2) lorsqu'une tension (Uᵥ) appliquée au relais de déclenchement (8) tombe en dessous d'une valeur limite de tension prédéterminée (U_{G}) ;
- avec un circuit de retard (7) comprenant un condensateur (24) et qui, lorsque la tension de réseau (U_{N}) baisse, maintient la tension (U_{V}) appliquée au relais de déclenchement (8) pendant un temps de retard prédéterminé avec une valeur dépassant la valeur limite de tension (U_{G}) ; et
- avec un redresseur (6) monté en amont du circuit de retard (7) et via lequel une tension de réseau redressée (U̅_{N}) est envoyée sur le circuit de retard ;
**caractérisé en ce que** le circuit de retard (7) comporte des moyens (25, 31) qui, en cas d'augmentation brusque de la tension de réseau (UN), suppriment l'effet de retard par limitation du courant de charge du condensateur (24).

2. Déclencheur à manque de tension selon la revendication 1, **caractérisé en ce qu'**est prévu au moins un commutateur auxiliaire (9) qui, en avance sur la fermeture du disjoncteur de protection de ligne (4), applique la tension de réseau (U_{N}) au circuit électrique de déclenchement (5).

3. Déclencheur à manque de tension selon l'une des revendications 1 ou 2, **caractérisé en ce que** le circuit de retard (7) comprend un condensateur (24), monté en parallèle avec le relais de déclenchement (8), avec une résistance de charge (25) montée en amont dudit condensateur dans le chemin parallèle (22) en tant que moyen de suppression de l'effet de retard.

4. Déclencheur à manque de tension selon l'une des revendications 1 ou 2, **caractérisé en ce que** le circuit de retard (7) comprend un condensateur (24), monté en parallèle avec le relais de déclenchement (8), avec une self inductive (31) montée en amont dudit condensateur dans le chemin parallèle (22) en tant que moyen de suppression de l'effet de retard.

5. Déclencheur à manque de tension selon l'une des revendications 1 à 4, **caractérisé en ce qu'**une diode (26) bloquante dans le sens de la charge (L) est montée en parallèle avec le moyen (25, 31) de suppression de l'effet de retard.
